# EUROPEAN PATENT APPLICATION

(11) **EP 2 750 035 A1**
(43) Date of publication of application: **02.07.2014**
(21) Application number: 13188996.6
(22) Date of filing: 16.10.2013
(51) Int. Cl.: G06F 9/445, G06F 9/455

(54) **Computing device and method for installing computer programs in virtual machines**

(30) Priority: 26.12.2012 TW 101149940
(71) Applicant: Hon Hai Precision Industry Co., Ltd., New Taipei City (TW)
(72) Inventor: Peng, Kuan-Chiao, New Taipei (TW); Yeh, Chien-Fa, New Taipei (TW); Lee, Chung-I, New Taipei (TW); Lin, Yen-Hung, New Taipei (TW)
(74) Representative: Gray, John James

(57) **Abstract**

In a method for installing computer programs in virtual machines of a computing device, one or more virtual hard disk drives are created in a storage device connected to the computing device (S301). Each of the virtual hard disk drives includes one or more computer programs. A target virtual machine and a target computer program are determined (S302). A virtual hard disk drive that includes the target computer program is determined (S303). The determined virtual hard disk drive is mounted to the target virtual machine (S304).

## Description

### Field

Embodiments of the present disclosure relate to virtual machine technology, and particularly to a computing device and method for installing computer programs in virtual machines of the computing device.

### BackGround

In virtual machine technology, a plurality of virtual machines (VMs) may be installed in a computing device. To provide special services to users, certain computer programs may be installed in the virtual machines. A user can download the computer programs from a remote device and install the computer programs in the virtual machine. However, downloading the computer programs from the remote device may be time-consuming and sometimes the download may fail.

### Summary

According to one aspect of the disclosure, a method for installing computer programs in virtual machines of a computing device is provided. The method includes: creating one or more virtual hard disk drives in a storage device connected to the computing device, each of the virtual hard disk drives including one or more computer programs; determining a target virtual machine from the virtual machines and a target computer program from the computer programs; determining a virtual hard disk drive that comprises the target computer program; and mounting the determined virtual hard disk drive to the target virtual machine.

### BRIEF DESCRIPTION OF THE DRAWINGS

Embodiments of the invention are described, by way of example only, with reference to the accompanying drawings, in which:

FIG. 1 is one embodiment of an application of a computing device including an installation system.

FIG. 2 is a block diagram of one embodiment of function modules of the installation system in FIG. 1.

FIG. 3 is a flowchart of one embodiment of a method for installing computer programs in virtual machines of the computing device of FIG. 1.

### DETAILED DESCRIPTION

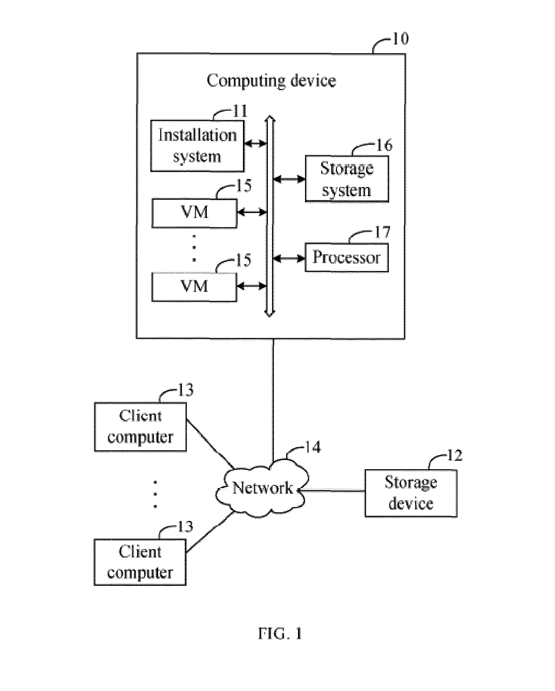

FIG. 1 is one embodiment of an application of a computing device 10 including an installation system 11. The computing device 10 is connected to a storage device 12 (e.g., storage server) and a plurality of client computers 13 through a network 14. One or more virtual machines (VMs) 15 are installed in the computing device 10 to provide services (e.g., computing services) to users. For example, three virtual machines 15 denoted as 15A, 15B, and 15C are installed in the computing device 10. The installation system 11 allows users to install computer programs in the virtual machines 15 quickly and conveniently. The network 14 can be a public network or a private network.

In this embodiment, the computing device 10 further includes a storage system 16 and at least one processor 17. The storage system 16 can be a dedicated memory, such as an erasable programmable read-only memory (EPROM), a hard disk drive (HDD), or flash memory. In some embodiments, the storage system 16 can be an external storage device, such as an external hard drive, a storage card, or a data storage medium.

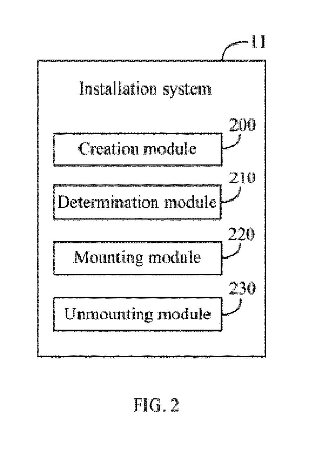

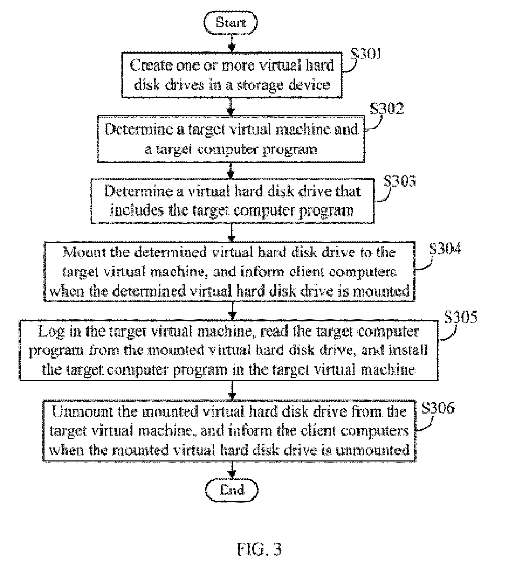

FIG. 2 is a block diagram of one embodiment of function modules of the installation system 11 in FIG. 1. The installation system 11 includes a creation module 200, a determination module 210, a mounting module 220, and an unmounting module 230. The modules 200-230 may comprise computerized code in the form of one or more programs that are stored in the storage system 16. The computerized code includes instructions that are executed by the at least one processor 17, to provide the aforementioned functions of the installation system 11. A detailed description of the functions of the modules 200-230 is given in reference to FIG. 3.

FIG. 3 is a flowchart of one embodiment of a method for installing computer programs in the virtual machines 15 of the computing device 10 using the computing device 10 of FIG. 1. Depending on the embodiment, additional steps may be added, others removed, and the ordering of the steps may be changed.

In step S301, the creation module 200 creates one or more virtual hard disk drives in the storage device 12. Each of the virtual hard disk drives includes one or more computer programs. For example, three virtual hard disk drives denotes as vDisk1, vDisk2, and vDisk3 are created in the storage device 12. The virtual hard disk drive vDisk1 includes a first computer program and a second computer program. The virtual hard disk drive vDisk2 includes a third computer program. The virtual hard disk drive vDisk3 includes a fourth computer program.

In step S302, the determination module 210 determines a target virtual machine 15 and a target computer program selected by a user. In one embodiment, the determination module 210 provides a user interface for the user to select the target virtual machine 15 and the target computer program. For example, the user selects the virtual machine 15B as the target virtual and selects the third computer program as the target computer program via one of the client computers 13.

In step S303, the determination module 210 determines a virtual hard disk drive from the created virtual hard disk drives that includes the target computer program. For example, the target computer program is the third computer program and the virtual hard disk drive vDisk2 is determined.

In step S304, the mounting module 220 mounts the determined virtual hard disk drive to the target virtual machine 15. For example, the mounting module 220 mounts the determined virtual hard disk drive vDisk2 to the target virtual machine 15B. Simultaneously, the unmounting module 230 starts counting how much time is passed. In this embodiment, the mounting module 220 informs the client computers 13 when the determined virtual hard disk drive is mounted to the target virtual machine 15.

In step S305, a client computer 13 logs in the target virtual machine 15, reads the target computer program from the mounted virtual hard disk drive, and installs the target computer program in the target virtual machine 15 from the mounted virtual hard disk drive.

In step S306, the unmounting module 230 unmounts the mounted virtual hard disk drive from the target virtual machine 15 when a preset time (e.g., an hour) has elapsed. For example, when an hour has elapsed, the unmounting module 230 unmounts the determined virtual hard disk drive vDisk2 from the target virtual machine 15B. In this embodiment, the unmounting module 230 informs the client computers 13 when the mounted virtual hard disk drive is unmounted from the target virtual machine 15.

While specific embodiments of the invention have been described above, it is to be understood that the embodiments described herein can be implemented in hardware, software, firmware, middleware, microcode, or any combination thereof. For example, the invention may take the form of a computer program containing one or more sequences of machine-readable instructions which, when executed by a computer, causes the computer to perform one or more method described above.

When the embodiments are implemented in software, firmware, middleware or microcode, program code or code segments, they can be stored in a machine-readable medium, such as a storage component. The term "machine-readable medium" can include, without being limited to, wireless channels and various other media capable of storing, containing, and/or carrying instruction(s) and/or data. A code segment can represent a procedure, a function, a subprogram, a program, a routine, a subroutine, a module, a software package, a class, or any combination of instructions, data structures, or program statements. A code segment can be coupled to another code segment or a hardware circuit by passing and/or receiving information, data, arguments, parameters, or memory contents. Information, arguments, parameters, data, etc. can be passed, forwarded, or transmitted using any suitable means including memory sharing, message passing, token passing, network transmission, etc. For a software implementation, the techniques described herein can be implemented with modules (e.g., procedures, functions, and so on) that perform the functions described herein. The software codes can be stored in memory units and executed by processors. The memory unit can be implemented within the processor or external to the processor, in which case it can be communicatively coupled to the processor via various means as is known in the art.

For a hardware implementation, the processing units can be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. All of the processes described above may be embodied in, and fully automated via, functional code modules executed by one or more general purpose electronic devices or processors. The code modules may be stored in any type of non-transitory machine-readable medium or other storage device. Some or all of the methods may alternatively be embodied in specialized hardware. Depending on the embodiment, the non-transitory machine-readable medium may be a hard disk drive, a compact disc, a digital video disc, a tape drive or other suitable storage medium.

It should be emphasized that the above-described embodiments of the present disclosure, particularly, any embodiments, are merely possible examples of implementations, merely set forth for a clear understanding of the principles of the disclosure. Many variations and modifications may be made to the above-described embodiment(s) of the disclosure without departing substantially from the spirit and principles of the disclosure. All such modifications and variations are intended to be included herein within the scope of this disclosure and the present disclosure and protected by the following claims.

## Claims

1. A method for installing computer programs in virtual machines of a computing device being executed by a processor of the computing device, the method comprising:
creating one or more virtual hard disk drives in a storage device connected to the computing device, each of the virtual hard disk drives comprising one or more computer programs;
determining a target virtual machine from the virtual machines and a target computer program from the computer programs;
determining a virtual hard disk drive that comprises the target computer program; and
mounting the determined virtual hard disk drive to the target virtual machine.

2. The method of claim 1, wherein a client computer logs in the target virtual machine, reads the target computer program from the mounted virtual hard disk drive, and installs the target computer program in the target virtual machine from the mounted virtual hard disk drive.

3. The method of claim 1 or 2, further comprising:
informing one or more client computers when the determined virtual hard disk drive is mounted to the target virtual machine.

4. The method of claim 1, 2 or 3, further comprising:
unmounting the mounted virtual hard disk drive from the target virtual machine.

5. The method of claim 4, further comprising:
informing one or more client computers when the mounted virtual hard disk drive is unmounted from the target virtual machine.

6. A computing device, comprising:
at least one processor; and
a storage system storing a plurality of instructions, which when executed by the at least one processor, cause the at least one processor to:
create one or more virtual hard disk drives in a storage device connected to the computing device, each of the virtual hard disk drives comprising one or
more computer programs;
determine a target virtual machine from the virtual machines and a target computer program from the computer programs;
determine a virtual hard disk drive that comprises the target computer program; and
mount the determined virtual hard disk drive to the target virtual machine.

7. The computing device of claim 6, wherein a client computer logs in the target virtual machine, reads the target computer program from the mounted virtual hard disk drive, and installs the target computer program in the target virtual machine from the mounted virtual hard disk drive.

8. The computing device of claim 6 or 7, wherein the instructions further cause the at least one processor to:
inform a client computer when the determined virtual hard disk drive is mounted to the target virtual machine.

9. The computing device of claim 6, 7 or 8, wherein the instructions further cause the at least one processor to:
unmount the mounted virtual hard disk drive from the target virtual machine.

10. The computing device of claim 9, wherein the instructions further cause the at least one processor to:
inform a client computer when the mounted virtual hard disk drive is unmounted from the target virtual machine.

11. A storage medium having stored thereon instructions that, when executed by a processor of a computing device, causes the processor to perform a method for installing computer programs in virtual machines of the computing device as claimed in any of claims 1 to 5.
